# EUROPÄISCHE PATENTSCHRIFT

(11) **EP 3 218 991 B1**
(45) Veröffentlichungstag und Bekanntmachung des Hinweises auf die Patenterteilung: **07.06.2023**
(21) Anmeldenummer: 15804336.4
(22) Anmeldetag: 13.11.2015
(51) Int. Cl.: H02K 1/27

(54) **PERMANENTMAGNET**
PERMANENT MAGNET
AIMANT PERMANENT

(30) Priorität: 14.11.2014 DE 102014223311
(43) Veröffentlichungstag der Anmeldung: 20.09.2017
(73) Patentinhaber: MIMplus Technologies GmbH & Co. KG, 75228 Ispringen (DE)
(72) Erfinder: BURKHARDT, Carlo, 75331 Engelsbrand (DE)
(74) Vertreter: Kordel, Mattias
(86) Internationale Anmeldenummer: PCT/EP2015/076583
(87) Internationale Veröffentlichungsnummer: WO 2016/075297

(56) Entgegenhaltungen:
- WO-A1-2015/118641
- WO-A2-02/49188
- WO-A2-2009/056180
- JP-A- H07 312 836
- US-A1- 2013 088 114

## Beschreibung

Die Erfindung betrifft einen Permanentmagneten gemäß Oberbegriff des Anspruchs 1.

Permanentmagneten der hier angesprochenen Art sind bekannt (US 2013/088114 A1). Sie werden verwendet in Zusammenhang mit elektrischen Maschinen, beispielsweise mit Elektromotoren und Generatoren. Hier angesprochen werden Permanentmagneten, die an einem Rotor von Elektromotoren oder Generatoren angebracht sind. Derartige elektrische Maschinen zeichnen sich dadurch aus, dass es nicht der Übertragung elektrischer Energie vom stehenden Teil der Maschinen, dem Stator, auf die rotierende Komponente bedarf. Elektrische Maschinen der hier angesprochenen Art sind bekannt. Es ist auch bekannt, dass die Befestigung von Permanentmagneten an einem Rotor häufig problematisch ist. Es ist bekannt, Permanentmagnete auf der Außenfläche des Rotors mit Hilfe von speziellen Klebstoffen zu befestigen. Hierbei haben sich Nachteile ergeben, insbesondere Klebstoffüberschüsse. Bekannt ist es auch, Permanentmagnete der hier angesprochenen Art formschlüssig an einem Rotor anzubringen. Derartige Permanentmagnete werden vorzugsweise im Presssinterverfahren hergestellt, wobei es zwar möglich ist, eine große Anzahl von Magneten kostengünstig herzustellen. Problematisch ist jedoch, dass mittels des bekannten Verfahren lediglich vergleichsweise einfache geometrische Formen von Permanentmagneten realisiert werden können, sodass der Rotor, an dem der Permanentmagnet befestigt werden soll, aufwändige und komplizierte Geometrien aufweisen muss, um derartig ausgeformte Permanentmagneten aufnehmen zu können.

Aufgabe der Erfindung ist es daher, einen Permanentmagneten zu schaffen, der auf einfache und kostengünstige Weise an einem Rotor mittels eines Formschlusses befestigt werden kann.

Zur Lösung dieser Aufgabe wird ein Permanentmagnet mit den Merkmalen des Anspruchs 1 vorgeschlagen. Der Permanentmagnet ist ausgebildet zur Verwendung mit einem Rotor einer elektrischen Maschine, insbesondere eines Elektromotors oder Generators, wobei er mittels eines Metallpulver-Spritzgussverfahrens oder eines additiven Verfahrens hergestellt ist. Häufig werden additive Verfahren auch als generative Verfahren bezeichnet. Mittels der hier erwähnten Herstellungsverfahren ist es möglich, Permanentmagneten mit speziellen Formen, insbesondere Querschnitten zu realisieren, die dann relativ einfach und preiswert an einem Rotor befestigt werden können.

Mittels der hier beschriebenen Verfahren ist es darüber hinaus möglich, eine Mehrzahl von Permanentmagneten so auszugestalten, dass sie reproduzierbar und betriebssicher an einem Rotor befestigt werden können. Aufgrund der hier gewählten Herstellungsverfahren ist es außerdem möglich, sehr kleine Motoren im Miniaturbereich zu realisieren, wobei im Gegensatz zu den bekannten Herstellungsverfahren bei der Herstellung der Permanentmagneten keine oder praktisch keine Zerspanung erforderlich ist. Dies gilt im Übrigen auch bei der Verwendung derartiger Permanentmagneten im Zusammenhang mit Schrittmotoren, bei denen vorzugsweise eine enge Teilung der Permanentmagnete über den Rotorumfang gewählt wird, was nur durch sehr schmale Magnetsegmente realisierbar ist.

Ein nicht zur Erfindung gehörendes Ausführungsbeispiel des Permanentmagneten weist einen im Wesentlichen T-förmigen Querschnitt auf. Derartige Magneten können in komplementär ausgebildete Nuten eines Rotors eingebracht werden, die vorzugsweise parallel zu dessen Drehachse verlaufen. Durch die T-förmige Ausgestaltung der Permanentmagnete ergibt sich ein sicherer Halt am Rotor, auch und insbesondere bei hohen Drehzahlen.

Bevorzugt wird außerdem ein Ausführungsbeispiel des Permanentmagneten, der sich dadurch auszeichnet, dass er einen im Wesentlichen U-förmigen Querschnitt aufweist. Dieser Querschnitt ist mittels der genannten Verfahren einfach, das heißt kostengünstig, und sehr präzise herstellbar, sodass eine sichere Befestigung an einem Rotor möglich ist. Dabei ergibt sich aufgrund der U-förmigen Kontur des Permanentmagneten die Tatsache, dass beide Schenkel des U-förmigen Querschnitts als parallel zueinander verlaufende Pole des Permanentmagneten ausgebildet sind. Werden derartige Permanentmagneten nebeneinander in einem Rotor befestigt, ergibt sich eine sehr enge Teilung der Pole über den Rotorumfang.

Ein nicht zur Erfindung gehörendes Ausführungsbeispiel des Permanentmagneten weist eine Anzahl von streifenförmigen Magnetelementen auf, die parallel zueinander verlaufen und an einem Ende mittels eines Stegs miteinander verbunden sind, welcher vorzugsweise quer zur Längserstreckung der Magnetelemente verläuft.

In einem weiteren nicht zur Erfindung gehörenden Ausführungsbeispiel ist dieser Steg ringförmig ausgebildet. Der Permanentmagnet weist also eine Anzahl von parallel zueinander verlaufenden Magnetelementen auf, die deshalb bei Einbau in einen Rotor besonders einfach zu handhaben sind, weil sie auf einer Seite durch einen ringförmigen Steg miteinander verbunden sind, während die gegenüberliegenden Enden der Magnetelemente frei sind und in entsprechende Schlitze eines Rotors eingeschoben werden können. Damit ist eine Montage des Permanentmagneten an einem Rotor sehr einfach möglich.

Ein weiteres nicht zur Erfindung gehörendes Ausführungsbeispiel des Permanentmagneten weist eine Anzahl von parallel zueinander verlaufenden Magnetelementen auf, die durch einen ringförmigen Steg miteinander verbunden sind und insbesondere dadurch, dass der Abstand zweier benachbarter Magnetelemente so groß ist wie die Breite der Magnetelemente. Aufgrund dieser nicht zur Erfindung gehörenden Ausgestaltung ist es möglich, zwei derartige Permanentmagnete ineinander zu schieben, sodass sich eine Umfangsfläche ergibt, auf der sich die magnetischen Pole unmittelbar angrenzend abwechseln.

Weitere Ausgestaltungen ergeben sich aus den übrigen Unteransprüchen.

Die Erfindung wird im Folgenden anhand der Zeichnung näher erläutert. Es zeigen:
- Figur 1: eine Stirnansicht eines Rotors mit einer Anzahl eines ersten nicht zur Erfindung gehörenden Ausführungsbeispiels eines Permanentmagneten,
- Figur 2: eine Seitenansicht des Rotors nach Figur 1,
- Figur 3: einen Rotor in Stirnseitenansicht mit einer Anzahl eines zweiten nicht zur Erfindung gehörenden Ausführungsbeispiels eines Permanentmagneten;
- Figur 4: eine Schnittdarstellung durch einen Rotor mit einer Anzahl eines erfindungsgemäßen Ausführungsbeispiels eines Permanentmagneten;
- Figur 5: eine Seitenansicht des Rotors gemäß Figur 4,
- Figur 6: eine perspektivische Ansicht zweier Permanentmagneten in einer dritten nicht zur Erfindung gehörenden Ausführungsform und
- Figur 7: die beiden Permanentmagneten nach Figur 6 in zusammengeschobener Position.

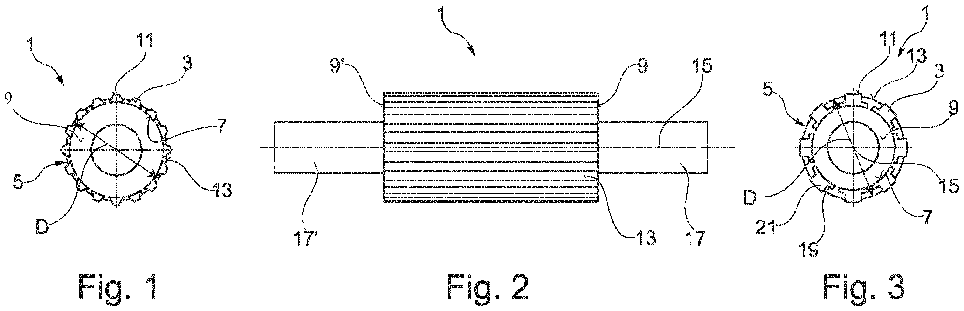

Figur 1 zeigt in Draufsicht auf die Stirnseite eines Rotors 1 mit mindestens einem ersten nicht zu Erfindung gehörenden Ausführungsbeispiel eines Permanentmagneten 3. Bei dem hier dargestellten Rotor 1 sind sechzehn derartige Permanentmagneten 3 vorgesehen. Der Rotor 1 weist einen Grundkörper 5 auf, in den eine Anzahl von parallel zu dessen Längserstreckung verlaufenden Nuten 7 eingebracht sind, die dazu dienen, jeweils einen Permanentmagneten 3 aufzunehmen. Da Figur 1 eine Draufsicht auf eine Stirnseite 9 des Grundkörpers 5 zeigt, wird deutlich, dass die mindestens eine Nut 7 einen trapezförmigen Querschnitt aufweist und dass auch der mindestens eine Permanentmagnet 3 einen entsprechenden Querschnitt aufweist. Allerdings ist die Höhe der Permanentmagneten 3 so hoch gewählt, dass deren Außenfläche 11 über die Umfangfläche 13 des Grundkörpers 5 hinausragt. Figur 1 zeigt noch, dass die Anzahl der Nuten 7 und die der Permanentmagneten 3 gleich gewählt ist und dass die Nuten 7 in gleichen Umfangsabständen zueinander angeordnet sind.

Der in Figur 1 wiedergegebene Rotor 1 mit dem Durchmesser D zeichnet sich dadurch aus, dass die einzelnen Permanentmagneten 3 sehr dicht nebeneinander liegen. Es zeigt sich also, dass hier insbesondere ein Rotor 1 eines Schrittmotors realisiert ist.

Figur 2 zeigt den in Figur 1 wiedergegebenen Rotor 1 in Seitenansicht. Gleiche Teile sind mit gleichen Bezugsziffern versehen, sodass insofern auf die vorangegangene Beschreibung verwiesen wird.

Figur 2 lässt erkennen, dass die Permanentmagnete 3 parallel zueinander in der Umfangsfläche 13 angeordnet sind und parallel zur Längsachse 15 des Rotors verlaufen, die auch dessen Rotationsachse bildet. Darüber hinaus zeigt sich, dass die Permanentmagnete 3 sich über die gesamte Länge des Rotors 1 erstrecken, also von dessen rechter Stirnseite 9 bis zu dessen linker Stirnseite 9`.

Über die Stirnseiten 9, 9' ragen rechts und links Achsstummel 17, 17`, welche der Lagerung des Rotors 1 in einer elektrischen Maschine, sei es eines Elektromotors oder eines Generators, dienen.

Figur 3 zeigt ein abgewandeltes Ausführungsbeispiel eines einen Durchmesser D aufweisenden Rotors 1 in Stirnseitenansicht mit mindestens einem zweiten nicht zur Erfindung gehörenden Ausführungsbeispiel eines Permanentmagneten 3. Bei dem hier dargestellten Ausführungsbeispiel ist der Rotor 1 mit acht Permanentmagneten ausgestaltet, die, wie der Grundkörper 5 des Rotors 1, senkrecht zur Bildebene von Figur 3 verlaufen, wie dies auch bei Figur 1 der Fall ist.

Der Rotor 1 weist hier T-förmige Nuten 7 auf, wobei die Anzahl der Nuten 7 vorzugsweise der der Permanentmagneten 3 entspricht. Es zeigt sich in Figur 3 auch, dass - im Querschnitt gesehen - auch die Permanentmagneten 3 einen T-förmigen Querschnitt aufweisen, wobei ein Fuß 19 der Permanentmagneten, wie auch die Basis der Nut 7 - im Querschnitt gesehen - gebogen ausgeführt ist, vorzugsweise kreisbogenförmig, wobei der Mittelpunkt der Kreisbögen auf der Längsachse 15 liegt. Von dem Fuß geht gegenüber der Mittelachse 15 radial nach außen ein senkrecht zum Fuß 19 verlaufender Abschnitt 21 aus, der so lang ausgebildet ist, dass auch hier die Außenfläche 11 des Permanentmagneten 3 über die Umfangsfläche 13 des Grundkörpers 5 des Rotors 1 hinaussteht.

Die in Figur 3 gewählte Ausgestaltung des zweiten nicht zur Erfindung gehörenden Ausführungsbeispiels des mindestens eine Permanentmagneten 3 zeichnet sich dadurch aus, dass die Magneten ganz besonders gut im Grundkörper 5 des Rotors 1 verankert werden können, sodass sie auch bei sehr hohen Belastungen, insbesondere hohen Drehzahlen, sich nicht lösen, was zu einem Schaden der elektrischen Maschine führen würde, in welcher der Rotor 1 mit dem Permanentmagneten 3 eingesetzt wird, gegebenenfalls auch zu einer Gefährdung von umstehenden Personen.

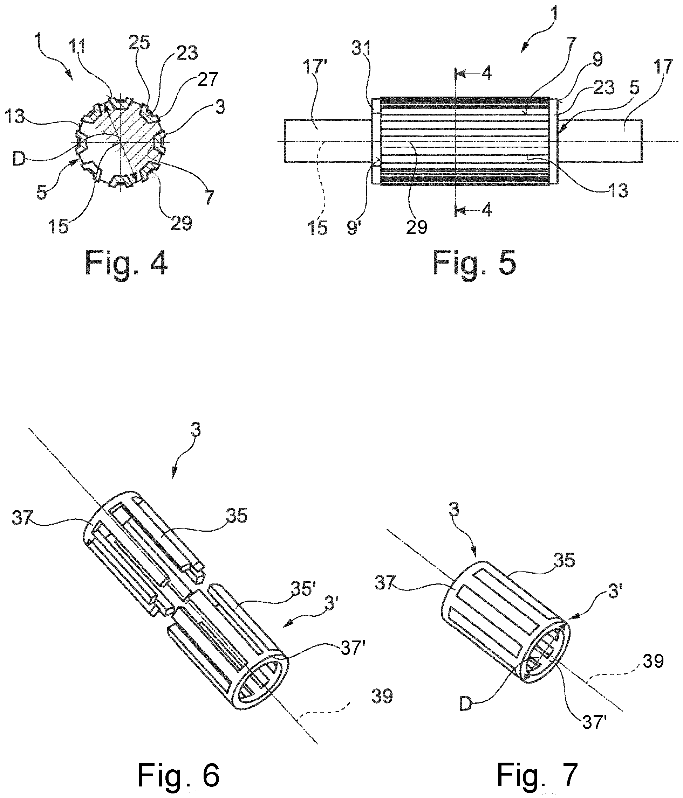

Figur 4 zeigt im Querschnitt ein erfindungsgemäßes Ausführungsbeispiel mindestens eines Permanentmagneten 3, welcher in den Grundkörper 5 eines Rotors 1 eingesetzt ist, welcher einen Durchmesser D aufweist. Bei dem hier gewählten Ausführungsbeispiel sind acht Permanentmagnete 3 in den Grundkörper 5 eingesetzt und zwar in Nuten 7, die im Wesentlichen U- beziehungsweise V-förmig ausgebildet sind. Sie weisen einen Boden auf, der vorzugsweise kreisbogenförmig gekrümmt ist, wobei sich der Mittelpunkt des Kreisbogens auf der Längsachse 15 des Rotors 1 befindet.

Jeder der Permanentmagnete 7 ist ebenfalls im Wesentlichen U- beziehungsweise V-förmig ausgebildet, wobei jeder eine am Grund der Nut 7 anliegende Basis 23 aufweist, von der zwei, hier vorzugsweise einen sich ausgehend von der Längsachse 15 nach außen öffnenden Winkel einschließende Arme 25, 27 aufweisen. Die von der Längsachse 15 ausgemessene Länge der Arme 25, 27 ist so gewählt, dass deren Außenfläche 11 über die Umfangsfläche 13 des Grundkörpers 5 des Rotors 1 hinausstehen.

Die Permanentmagnete 3 können in den Grundkörper 5 eingeklebt werden. Vorzugsweise ist jedoch vorgesehen, dass in dem von der Basis 23 und den Armen 25, 27 umgebenden Raum ein Materialstreifen 29 des Grundkörpers 5 verläuft, der die Permanentmagnete 3 sicher am Grundkörper 5 hält.

Die Permanentmagnete 3 sind so ausgebildet, dass die beiden Arme 25 und 27 entgegengesetzte Pole darstellen, sodass sich auf der Umfangsfläche 13 bei Verwendung der hier dargestellten acht Permanentmagnete 3 sechzehn Pole ergeben, die sich in Umfangsrichtung abwechseln und die Umfangsfläche 13 überragen.

Figur 5 zeigt den in Figur 4 wiedergegebenen Rotor 1 in Seitenansicht. Gleiche Teile sind mit gleichen Bezugsziffern versehen, sodass insofern auf die vorangegangene Beschreibung verwiesen wird.

Durch eine gestrichelte Linie 4-4 ist angedeutet, wo die Schnittebene gemäß Figur 4 liegt.

Der in Figur 5 wiedergegebene Rotor 1 weist rechts eine Stirnseite 9, und links eine Stirnseite 9' auf, an welcher eine Befestigungsscheibe 31 anliegt. Die Darstellung gemäß Figur 5 lässt erkennen, dass die in den Grundkörper 5 des Rotors 1 eingebrachten Nuten nicht bis zur rechten Stirnseite 9 durchgehen, sondern dass sie vielmehr durch einen Wandabschnitt 33 verschlossen sind.

Auf der linken Seite, also im Bereich der Stirnseite 9', sind die Nuten 7 offen, sodass von dort aus die Permanentmagneten 3 eingeschoben werden können. Deutlich wird hier, dass die U- beziehungsweise V-förmigen beim Permanentmagneten 3 jeweils durch einen Materialstreifen 29 am Grundkörper 5 gehalten werden, welcher von dem Wandabschnitt 33 entspringt.

Auf der linken Seite, im Bereich der Stirnseite 9`, werden die Permanentmagneten 3 durch die Befestigungsscheibe 31 gehalten, die mittels geeigneter Befestigungsmittel am Grundkörper 5 gehalten wird, beispielsweise durch mindestens eine Schraube, welche die Befestigungsscheibe durchdringt und in den Grundkörper 5 eingreift.

Auch bei diesem Ausführungsbeispiel ist vorgesehen, dass über die Stirnseiten 9, 9' Achsstummel 17, 17' ragen, mittels derer der Rotor 1 in einer elektrischen Maschine drehbar gelagert werden kann.

Figur 6 zeigt ein drittes nicht zur Erfindung gehörendes Ausführungsbeispiel eines Permanentmagneten 3. Bei diesem ist vorgesehen, dass der Permanentmagnet 3 eine Anzahl von Magnetelementen 35 aufweist, die auf einer Seite mit ihrem Ende mit einem Steg 37 verbunden sind. Aus Figur 6 ist ersichtlich, dass bei diesem Ausführungsbeispiel der Steg ringförmig ausgebildet ist. Es ist aber sehr wohl denkbar, den Steg nicht umlaufend auszubilden, sondern beispielsweise nur jeweils zwei Magnetelemente 35 miteinander durch einen Steg zu verbinden, oder diesen halbkreisförmig auszubilden.

Der Steg 37 verläuft quer zur Längserstreckung der Magnetelemente, die parallel zu der Mittelachse 39 der ringförmigen Stegs 37 verlaufen. Insgesamt ist erkennbar, dass die Magnetelemente 35 auf einer gedachten zylindrischen Oberfläche liegen.

Der Permanentmagnet 3 weist also nach allem eine Basis für eine Anzahl von Magnetelementen 35 auf, von welcher diese entspringen. Die Basis wird hier durch einen Steg 37 realisiert, welcher dazu dient, die Magnetelemente 35 in einer gewünschten Relativposition zueinander zu halten.

Grundsätzlich ist es möglich, einen hier dargestellten Permanentmagneten 3 mit einem einen Durchmesser D aufweisenden Rotor zu kombinieren, der hier nicht dargestellt ist, beispielsweise mit dem Rotor 1, gemäß Figur 5, der sich dadurch auszeichnet, dass an seiner linken Stirnseite 9` die die Permanentmagneten aufnehmende Nuten 7 offen sind. Der in Figur 6 dargestellte Permanentmagnet könnte also von links in den in Figur 5 dargestellten Rotor eingeschoben werden. In diesem Fall wäre es erforderlich, die nebeneinanderliegenden Magnetelemente 35 so zu magnetisieren, dass sich deren Magnetpole abwechseln.

Aus Figur 6 ist ersichtlich, dass der beschriebene Permanentmagnet 3 mit einem identisch ausgebildeten Permanentmagneten 3' kombiniert werden kann. Beide Permanentmagneten 3, 3' weisen nebeneinanderliegende Magnetelemente 35 auf, die parallel zueinander ausgerichtet und auf einer gedachten Zylinderfläche angeordnet sind. Die einen Enden der Magnetelemente 35 sind frei, die anderen sind über einen Steg 37 des Permanentmagneten 3 beziehungsweise einen Steg 37' des Permanentmagneten 3' verbunden.

Derartige Permanentmagneten 3, 3' könnten von zwei Seiten in den Grundkörper 5 eines Rotors 1 geschoben werden, sofern dieser mit Nuten 7 versehen ist, die an beiden Stirnseiten 9, 9' offen sind. Vorzugsweise ist jedoch vorgesehen, dass die Abstände zwischen zwei parallelen Magnetelementen 35 eines Permanentmagneten 3, 3' alle gleich breit sind, gemessen in Umfangsrichtung bezüglich der Mittelachse 39. Außerdem ist vorgesehen, dass die Breite der einzelnen Magnetelemente 35, ebenfalls gemessen in Umfangsrichtung, der Breite der Zwischenräume zwischen je zwei benachbarten Magnetelementen 35 entspricht.

Auf diese Weise ist es möglich, die freien Enden der Magnetelemente 35 eines Permanentmagneten 3 und die freien Enden der Magnetelemente 35' eines Permanentmagneten 3' ineinander zu schieben, bis diese freien Enden jeweils an den Stegen 37, 37' des anderen Permanentmagneten 3, 3' anliegen.

Vorzugsweise ist es möglich, die Magnetelemente 35 in ihren Seitenbereichen mit hier nicht dargestellten Längsrillen beziehungsweise längsverlaufenden Rippen zu versehen, sodass die Magnetelemente 35, 35' zweier Permanentmagneten 3, 3' formschlüssig ineinandergreifen.

Figur 7 zeigt die beiden ineinander geschobenen Permanentmagneten 3, 3`. Es wird hier besonders deutlich erkennbar, dass die ineinander geschobenen Magnetelemente 35 und 35' der beiden Permanentmagnete 3, 3' einen Rotor 1 mit einem Durchmesser D bilden, der eine geschlossene Umfangsfläche aufweist, in der sich aneinander liegende magnetische Pole abwechseln. In den Rotor 1 wird Kern mit Achsstummeln eingeschoben, wie sie oben erläutert wurden.

Die Magnetelemente 35, 35' können sehr schmal ausgebildet werden, sodass auf einfache Weise gemäß den Figuren 6 und 7 Schrittmotoren mit einer hohen Anzahl von nebeneinanderliegenden Permanentmagneten ergibt.

Vorzugsweise ist vorgesehen, dass die Breite der Magnetelemente 35 - bezogen auf den Durchmesser D des Rotors 1 - in einem Bereich D/2 bis D/32 liegt, insbesondere D/8 bis D/10 beträgt. Die Dicke der Magnetelemente kann in einem Bereich von D/8 bis D/64 gewählt werden und insbesondere D/12 bis D/16 betragen. Dabei kann die Länge der Magnetelemente 35 in einem Bereich von D/8 bis 4D liegen und insbesondere D bis 2D betragen.

Diese Maßangaben können auch bei der Realisierung der aus den Figuren 1 bis 5 ersichtlichen Permanentmagnete 3 gewählt werden, um, in Umfangsrichtung gesehen, eine hohe nebeneinanderliegende Anzahl von abwechselnden Magnetpolen vorzusehen und damit einen Schrittmotor zu realisieren.

## Patentansprüche

1. Permanentmagnet ausgebildet zum Einsetzen in eine Nut (7) eines Rotors (1) einer elektrischen Maschine, insbesondere eines Elektromotors oder Generators, wobei der Rotor (1) einen Grundkörper (5) hat, welcher einen Durchmesser D aufweist, wobei die Nuten (7) im Wesentlichen U- oder V-förmig ausgebildet sind, wobei der Permanentmagnet (3) mittels eines Metallpulver-Spritzgussverfahrens oder eines additiven Verfahrens hergestellt ist, wobei der Permanentmagnet (3) im Wesentlichen U- oder V-förmig ausgebildet ist und zwei von einer Basis (23) ausgehende Arme (25, 27) aufweist, **dadurch gekennzeichnet, dass** die Basis (23) des Permanentmagneten (3) zum Anliegen am Grund der Nut (7) ausgebildet ist und die von der Basis (23) ausgehenden Arme (25, 27) einen sich ausgehend von einer Längsachse (15) des Rotors (1) nach außen öffnenden Winkel der Nut (7) einschließen und die Länge der Arme (25, 27) so gewählt ist, dass deren Außenflächen über die Umfangsfläche (13) des Grundkörpers (5) des Rotors (1) hinausstehen und die beiden Arme (25, 27) entgegengesetzte Pole darstellen.

2. Permanentmagnet nach Anspruch 1, **dadurch gekennzeichnet, dass** er - bezogen auf den Durchmesser D des Rotors (1) - eine - in Umfangsrichtung des Rotors (1) gemessene - Breite von D/2 bis D/32, insbesondere von D/8 bis D/10, eine Dicke von D/8 bis D/64, insbesondere von D/12 bis D/16 und eine Länge D/8 bis 4D, insbesondere von D bis 2D aufweist.

## Claims

1. Permanent magnet configured for insertion into a groove (7) of a rotor (1) of an electrical machine, in particular of an electric motor or generator, wherein the rotor (1) having a main body (5) which has a diameter D, wherein the grooves (7) are configured essentially U-shaped or V-shaped, wherein the permanent magnet (3) being produced by means of a metal injection moulding process or an additive process, wherein the permanent magnet (3) is configured substantially U-shaped or V-shaped and having two arms (25, 27) extending from a base (23), **characterised in that** the base (23) of the permanent magnet (3) is configured to rest on the ground of the groove (7) and the arms (25, 27) extending from the base (23) enclose an angle of the groove (7) opening outwards from a longitudinal axis (15) of the rotor (1) and the length of the arms (25, 27) is selected such that their outer surfaces project beyond the circumferential surface (13) of the main body (5) of the rotor (1) and the two arms (25, 27) represent opposing poles.

2. Permanent magnet according to claim 1, **characterized in that** it has - with respect to the diameter D of the rotor (1) - a width - measured in the circumferential direction of the rotor (1) - of D/2 to D/32, in particular of D/8 to D/10, a thickness of D/8 to D/64, in particular of D/12 to D/16, and a length D/8 to 4D, in particular of D to 2D.

## Revendications

1. Aimant permanent conçu pour être inséré dans une rainure (7) d'un rotor (1) d'une machine électrique, en particulier d'un moteur électrique ou d'un générateur, le rotor (1) ayant un corps de base (5) qui présente un diamètre D, les rainures (7) étant essentiellement en forme de U ou de V, l'aimant permanent (3) étant produit au moyen d'un procédé de moulage par injection de poudre métallique ou d'un procédé additif, l'aimant permanent (3) étant sensiblement en forme de U ou de V et comprenant deux bras (25, 27) partant d'une base (23), **caractérisé en ce que** la base (23) de l'aimant permanent (3) est conçue pour s'appliquer contre le fond de la rainure (7) et **en ce que** les bras (25, 27) partant de la base (23) forment un angle de la rainure (7) s'ouvrant vers l'extérieur à partir d'un axe longitudinal (15) du rotor (1) et **en ce que** la longueur des bras (25, 27) est choisie de telle sorte que leurs surfaces extérieures dépassent de la surface périphérique (13) du corps de base (5) du rotor (1) et que les deux bras (25, 27) représentent des pôles opposés.

2. Aimant permanent selon la revendication 1, **caractérisé en ce qu'**il présente - par rapport au diamètre D du rotor (1) - une largeur - mesurée dans la direction périphérique du rotor (1) - de D/2 à D/32, notamment de D/8 à D/10, une épaisseur de D/8 à D/64, notamment de D/12 à D/16 et une longueur de D/8 à 4D, notamment de D à 2D.
